# EUROPEAN PATENT SPECIFICATION

(11) **EP 3 120 912 B1**
(45) Date of publication and mention of the grant of the patent: **13.12.2017**
(21) Application number: 16170062.0
(22) Date of filing: 18.05.2016
(51) Int. Cl.: B01D 21/00, B01D 21/24, B03B 5/28, B03B 5/48, B03B 9/06

(54) **MACHINE AND METHOD FOR THE PRIMARY TREATMENT OF URBAN AND INDUSTRIAL WASTE WATER**
MASCHINE UND VERFAHREN ZUR HAUPTBEHANDLUNG DES STÄDTISCHEN UND GEWERBLICHEN ABWASSERS
MACHINE ET MÉTHODE DE TRAITEMENT PRIMAIRE DES EAUX USEES URBAINES ET INDUSTRIELLES

(30) Priority: 16.07.2015 IT UB20152224
(43) Date of publication of application: 25.01.2017
(73) Proprietor: Verza, Giampietro, 36071 Vicenza (IT)
(72) Inventor: Verza, Giampietro, 36071 Vicenza (IT)
(74) Representative: Bettello, Pietro

(56) References cited:
- WO-A2-2012/145763
- DE-C- 523 904
- US-A- 5 641 360
- US-A1- 2003 164 341
- US-B2- 6 997 328

## Description

The present invention relates to a machine for the primary treatment of urban and industrial waste water, according to the general part of claim 1. The invention further relates to a process relating to such a treatment, utilizing such a machine.

As is known, the purification cycle of urban and industrial waste water, consisting of a series of chemical, physical and biological processes, is always preceded by a primary treatment, known by the generic term of filtration, which aims to separate the liquid portion from the solid portion, consisting of settleable and not settleable substances.

In the prior art, the filtration of waste water, ranging from urban sewage/rain, industrial and organic waste water, takes place by means of filtration equipment which can be divided essentially into two types: floating belt rakers and channel auger.

The filtration equipment provided with floating belt rakers comprises a continuous filtering belt forming a tight mesh, with gaps from 1, 3 up to 6 mm provided with profiled elements adapted to convey the retained material to the ejection section placed in the higher part with respect to the containment tank of the waste water, where the lower part of said belt is immersed.

Channel auger filtration equipment consists of an auger rotating inside a perforated basket, so that the auger carries the suspended solids up to the discharge while the liquid is filtered by the perforated basket.

As an example, we may mention the machines that in jargon are called "dumpsters" used, in particular, in the agronomy and livestock field for separation of the liquid portion, to be used for fertigation, and the solid portion, to be used for composting.

Once implemented, this filtering equipment shows operating limits when used in the filtration of waste water also containing sand which, if not totally separated from the rest of the slurry (as the product resulting from filtration is called) may cause, in the subsequent purification steps, serious drawbacks such as abrasion of the movable mechanical equipment (such as pumps) and clogging of pipes.

By way of example only, we may mention in particular urban waste which is derived from waste water from sewers fed, in addition to sewage water, also by water collected through rain drainages, which in addition to rainwater also convey small stones and other heavy and abrasive materials.

In order to prevent such drawbacks, in the prior art, along with the common filtering machines there are also other machines, called "sand traps", substantially consisting of a decantation tank, where the sands and other solids settle on the bottom to be then picked up by an auger, while the sand-free liquid remains in the upper part of the tank and, through a spillway, it is discharged.

The most important prior art documents are: WO 2012/145763 A2, US 2003/164341 A1, US 6997328 B2, DE 523904 C and US 5641360 A.

In practice, this implies the need of implementing a machine for the primary treatment of urban and industrial waste water that is necessarily large-sized and, consequently, it will have substantial initial implementation, maintenance and ordinary and extraordinary maintenance costs.

The object of the present invention is to implement a machine for the primary treatment of urban and industrial waste water that is devoid of the drawbacks of known machines and similar equipment.

Specifically, the object of the invention is to implement a machine for the primary treatment of urban and industrial waste water adapted to carry out the filtration and sand trapping function employing a single structure, which is easy to implement, compact, having a small footprint and requiring minimum maintenance.

These objects are achieved by a machine that is characterized in that it is provided with a tank for the collection of waste water where a decantation zone and a filtration zone are present, which are kept mutually separated or made mutually communicating by means of a sliding gate which allows, on the upper part, the discharge, by overflowing, of the liquid and of the not settleable solid portion, and on the lower part, by means of an adjustable opening, it allows the outflow of the settled solid portion, such as sand, soil, rocks, gravel and various pebbles.

The invention will be better defined by the description of a possible embodiment thereof, made only by way of non-limiting example with the aid of the accompanying drawing tables, in which:
- fig. 1 (tab. I) shows a front elevation view of the machine of the invention;
- fig. 2 (tab. II) shows a front side view, cutaway according to line II-II in fig. 1;
- fig. 3 shows a side rear view of the machine according to line III-III in fig. 1;
- figs. 4-9 (tab. III-VII) show the operating steps of the machine of the invention.

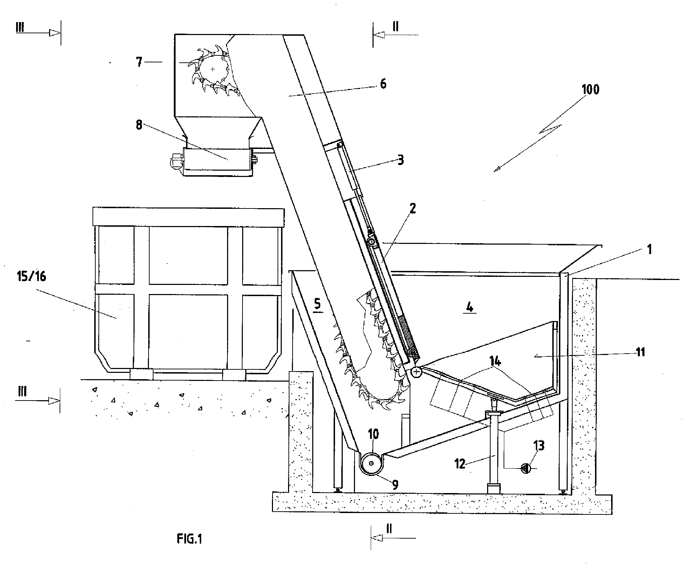

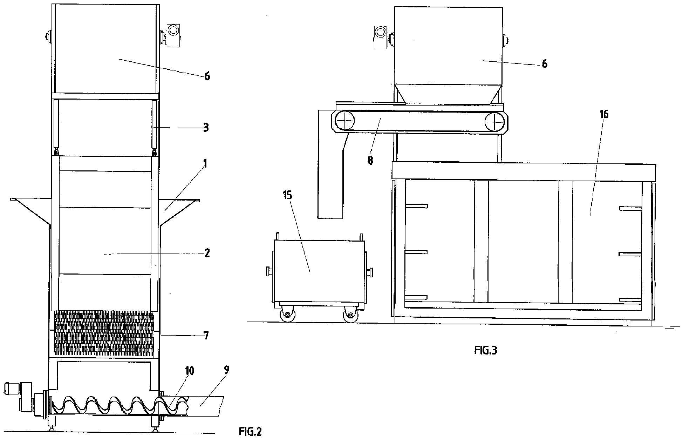

As shown in figs. 1-3, the machine of the invention, indicated as a whole with reference numeral 100, comprises a tank 1, which, by means of a gate 2 slidable by means of a motor 3, is divided at its interior into two zones, i.e. a front decantation zone 4 where the waste product to be treated is poured, and a rear filtration zone 5 where the filtration device 6 is positioned, specifically of the type with floating belt raker 7, which carries the solid component retained and discharges it onto an outer evacuation conveyor 8; vice versa, the filtered component consisting of the liquid component and solid micro-particles with size range smaller than the filtration port are collected in a lower duct 9 provided with an evacuation auger 10.

The invention also provides for the inclusion of a bucket 11 in the front zone 4, where the settleable solid substances, defined by the generic term of "solid residues", are accumulated by decantation, provided with a raising and rotation device 12, which facilitates the discharge of said solid substances.

Said bucket 11 is further connected to a pressurized fluid circuit 13, with which, by means of nozzles 14, placed at the base of said bucket 11, turbulences are generated in the waste mass; in particular, at the beginning of the waste treatment, splashes 20 are generated by injecting water or air into the plant, which facilitate the separation of the solid component with lower specific gravity than the heavier pebbles while, at the end of said treatment, splashes 21 are generated by injecting clean water and/or detergents which wash the pebbles so as to obtain, in particular, clean gravel ready for reuse.

Finally, it is provided that the evacuation conveyor 8 is provided with a two-way movement, so as to deposit in two separate collection containers 15 and 16, alternately, the non-settleable substances such as organic residues, which can be compacted to produce fertilizer compost and, on the other, the settleable substances such as pebbles, which can be reused in construction.

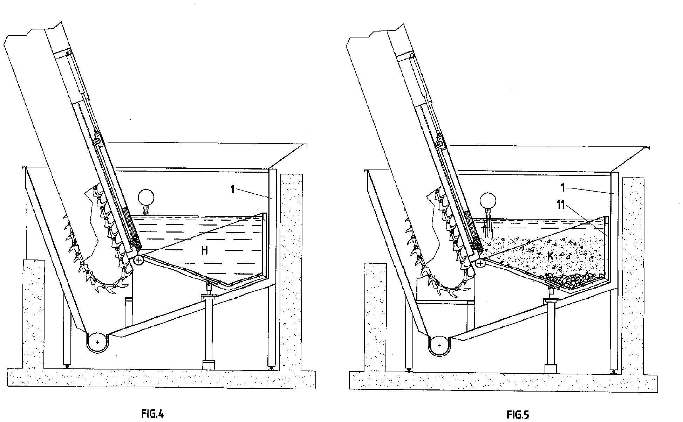

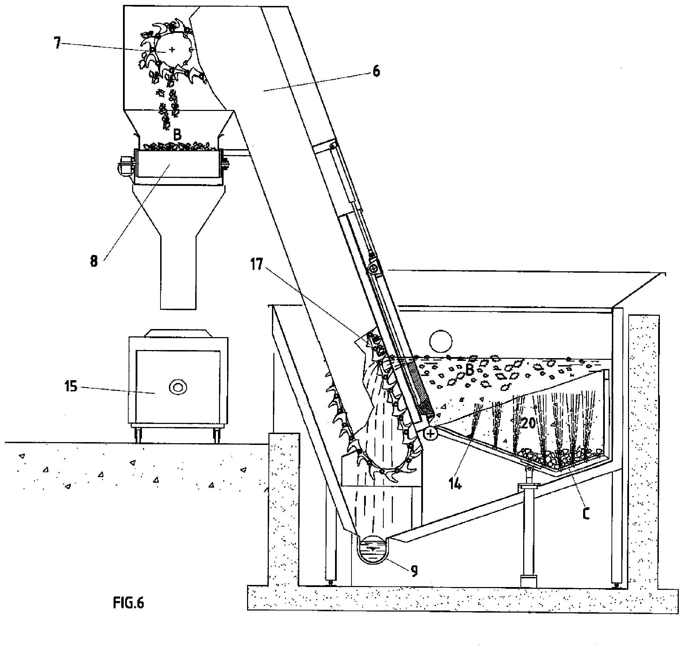

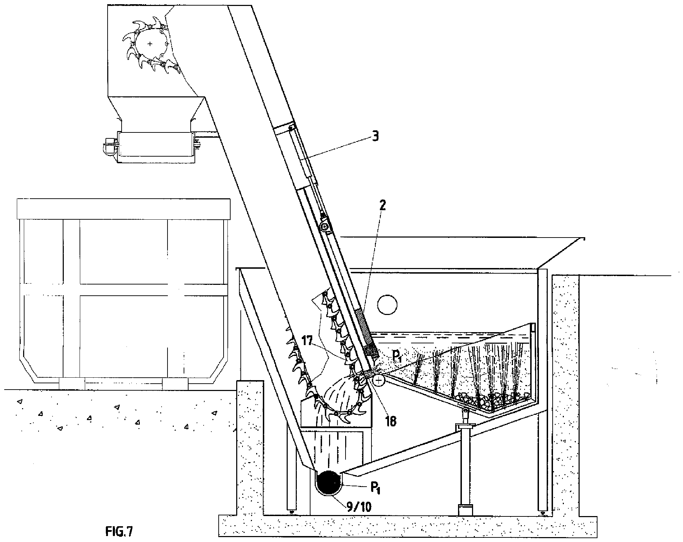

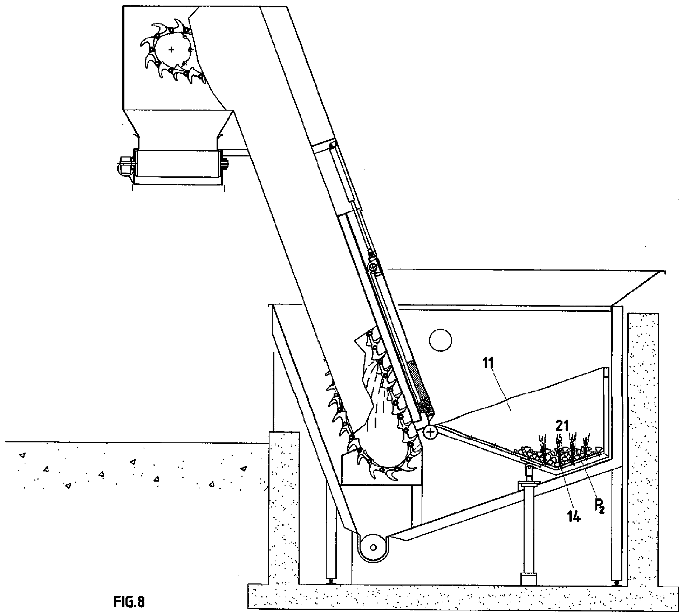

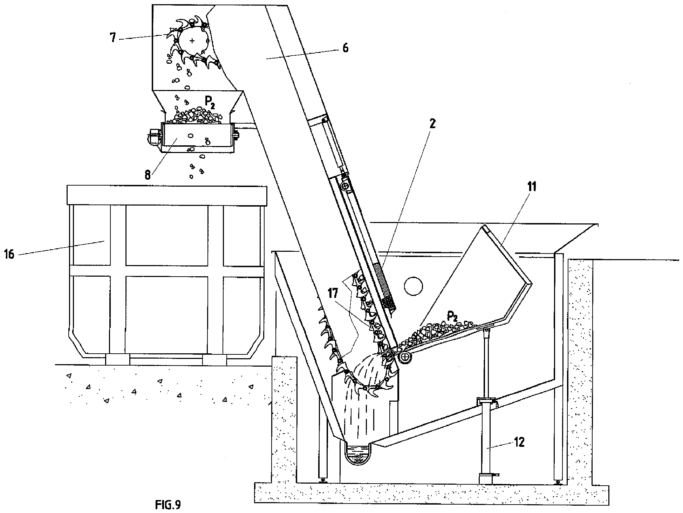

The specificity of the invention will be even clearer with the description of the operative steps:
- first step (fig. 4): water "H" is introduced, up to a preset level in tank 1, with gate 2 completely lowered to close;
- second step (fig. 5): the waste water "K" is poured in tank 1 and by effect of gravity, the heavier material "P", such as pebbles, is settled and is deposited inside bucket 11;
- third step (fig. 6): the circuit of pressurized fluid is activated and, by means of nozzles 14, splashes 20 are formed, which generate a turbulence in the waste water that separates the material with lower specific weight "B", for example organic residue, from the heavier material "C", bringing it towards the meshed wall 17, where it is filtered, so that the liquid portion is collected in duct 9 below, while the solid part is brought on the evacuation conveyor 8, which discharges it in the special container 15;
- fourth step (fig. 7): gate 2 is slightly raised to generate a small orifice 18 so that, by the effect of turbulence, the settled product "P1", having a particle size smaller than the filtration port of the meshed wall 17, passes through it and collects on duct 9, where it is decanted, by means of the extraction auger 10, so as to obtain a final product, such as sand perfectly clean and dry and ready for reuse in construction;
- fifth step (fig. 8): clean water and/or cleaning substances are injected by nozzles 14 to form splashes 21, which clean the settled product "P2", still contained in bucket 11;
- sixth step (fig. 9): gate 2 is completely raised and device 12 is actuated to move bucket 11, so that the settled clean product "P2", still contained in the aforesaid bucket 11, is poured on the meshed wall 17, which transports it onto the evacuation conveyor 8, from which it is discharged in the special container 16, so as to obtain a final product, such as clean pebbles, specifically gravel, ready to be reused.

## Claims

1. MACHINE FOR THE PRIMARY TREATMENT OF URBAN AND INDUSTRIAL WASTE WATER, which has the purpose of separating the liquid portion from the solid portion, consisting of settleable and not settleable substances of the type employing a single compact metal structure, which comprises a tank (1) for the collection of waste water, in which a front decantation zone (4), where the waste product to be treated is poured, and a rear filtration zone (5) are present, said machine being **characterized in that** the front decantation zone (4) and the rear filtration zone (5) are kept mutually separated or made mutually communicating by means of a motorized sliding gate (2, 3) which allows, on the upper part, the discharge, by overflowing, of the liquid and of the not settleable solid portion, and on the lower part, by means of an adjustable opening, allows the outflow of the settled solid portion, such as sand, soil, rocks, gravel and various pebbles.

2. MACHINE FOR THE PRIMARY TREATMENT OF URBAN AND INDUSTRIAL WASTE WATER, according to claim 1, **characterized in that**, it provides for the insertion in the front zone (4) of a bucket (11), where the settleable solid substances are accumulated by decantation, provided with a raising and rotation device (12), which facilitates the discharge of said solid substances.

3. MACHINE FOR THE PRIMARY TREATMENT OF URBAN AND INDUSTRIAL WASTE WATER, according to claim 2, **characterized in that** the bucket (11) is connected to a pressurized fluid circuit (13), with which, by means of nozzles (14), placed at the base of said bucket (11), splashes (20, 21) are generated, which hit the waste water mass contained in said bucket (11).

4. MACHINE FOR THE PRIMARY TREATMENT OF URBAN AND INDUSTRIAL WASTE WATER, according to claim 3, **characterized in that**, at the beginning of the waste water treatment, by injecting plant water or air, the splashes (20) are generated, which facilitate, in the waste water contained in the bucket (11), the separation of the solid component with lower specific weight (B) from the heavier solid component (C).

5. MACHINE FOR THE PRIMARY TREATMENT OF URBAN AND INDUSTRIAL WASTE WATER, according to claim 3, **characterized in that**, towards the end of the treatment, by injecting clean water and/or cleaning substances, splashes (21) are generated, which allow the washing of pebbles, such as gravel, left deposited on the bottom of the bucket (11).

6. MACHINE FOR THE PRIMARY TREATMENT OF URBAN AND INDUSTRIAL WASTE WATER, according to one or more of the preceding claims, **characterized in that**, in the rear filtration zone (5), a filtration device (6) is inserted, which carries the solid component retained and discharges it on an external evacuation conveyor (8), whereas the filtered component, constituted by the liquid and the solid microparticles, with particle size smaller than the filtration port, is collected in a lower duct (9).

7. MACHINE FOR THE PRIMARY TREATMENT OF URBAN AND INDUSTRIAL WASTE WATER, according to claim 6, **characterized in that** an evacuation auger (10) is inserted in the lower duct (9).

8. MACHINE FOR THE PRIMARY TREATMENT OF URBAN AND INDUSTRIAL WASTE WATER, according to claim 6, **characterized in that** the filtration device (6) consists of a floating belt raker (7).

9. MACHINE FOR THE PRIMARY TREATMENT OF URBAN AND INDUSTRIAL WASTE WATER, according to one or more of the preceding claims, **characterized in that** the evacuation conveyor (8) is provided with a bidirectional movement, provided for in order to deposit waste water in two different collection containers (15, 16), alternatively, the non settleable substances such as organic waste are collected in a first container (15), whereas the settleable substances, consisting of washed pebbles, such as gravel, are collected in a second container (16).

10. PROCESS FOR THE PRIMARY TREATMENT OF URBAN AND INDUSTRIAL WASTE WATER, by means of the machine according to one or more of the preceding claims, **characterized in that** it provides for the following operative steps:
- first step: plant water (H) is introduced, up to a preset level in the tank (1), with the gate (2) completely lowered to close;
- second step: the waste water (K) is poured in the tank (1) and by effect of gravity, the heavier material (P) is settled and is deposited inside the bucket (11);
- third phase: the circuit of pressurized fluid (13) is activated and, by means of the nozzles (14), splashes (20) are formed, which generate a turbulence in the waste water that separates the material with lower specific weight (B), for example organic residue, from the heavier material (C), bringing it towards the meshed wall (17), where it is filtered, so that the liquid portion is collected in the duct (9) below, while the solid part is brought on the evacuation conveyor (8), which discharges it in the special container (15);
- fourth step: the gate (2) is slightly raised by means of the motorization (3) to generate a small orifice (18) so that, by the effect of turbulence, the settled product (P1), having a particle size smaller than the filtration port of the meshed wall (17), passes through the same and collects on the duct (9), where it is decanted, by means of an extraction auger (10);
- fifth step: clean water and/or cleaning substances are injected by the nozzles (14) to form splashes (21), which clean the settled product (P2), still contained in the bucket (11);
- sixth step: the gate (2) is completely raised and the bucket (11) is actuated, so that the settled clean product (P2), still contained in the aforesaid bucket (11), is poured on the meshed wall (17), which transports it onto the evacuation conveyor (8), from which it is discharged in a special container (16).

## Patentansprüche

1. MASCHINE ZUR HAUPTBEHANDLUNG DES STÄDTISCHEN UND GEWERBLICHEN ABWASSERS, die dazu dient, den flüssigen Anteil vom Feststoffanteil zu trennen, bestehend aus absetzbaren und nicht absetzbaren Stoffen, des Typs, bei dem eine einzelne kompakte Metallstruktur eingesetzt wird, welche einen Tank (1) zum Sammeln von Abwasser umfasst, bei dem ein vorderer Dekantierbereich (4), in den das zu behandelnde Abfallprodukt geschüttet wird, und ein hinterer Filterbereich (5) vorhanden sind, wobei die Maschine **dadurch gekennzeichnet ist, dass** der vordere Dekantierbereich (4) und der hintere Filterbereich (5) mittels eines motorbetriebenen Schiebetors (2, 3) voneinander getrennt gehalten oder miteinander in Verbindung stehend sind, welcher im oberen Teil, dem Auslass, durch Überlaufen der Flüssigkeit und des nicht absetzbaren Feststoffanteils und im unteren Teil mittels einer einstellbaren Öffnung den Auslauf des abgesetzten Feststoffanteils, beispielsweise Sand, Erde, Geröll, Splitt und Kies erlaubt.

2. MASCHINE ZUR HAUPTBEHANDLUNG DES STÄDTISCHEN UND GEWERBLICHEN ABWASSERS nach Anspruch 1, **dadurch gekennzeichnet, dass** sie im vorderen Bereich (4) das Einfügen einer Schaufel (11) vorsieht, in der die absetzbaren Feststoffe während der Dekantierung gesammelt werden und die mit einer Dreh- und Hebevorrichtung (12) versehen ist, die das Auslassen der Feststoffe erleichtert.

3. MASCHINE ZUR HAUPTBEHANDLUNG DES STÄDTISCHEN UND GEWERBLICHEN ABWASSERS nach Anspruch 2, **dadurch gekennzeichnet, dass** die Schaufel (11) mit einem druckbeaufschlagten Flüssigkeitskreislauf (13) verbunden ist, durch welchen mittels an der Basis der Schaufel (11) angeordneter Düsen (14) Spritzer (20, 21) erzeugt werden, die auf die in der Schaufel (11) enthaltene Abwassermasse auftreffen.

4. MASCHINE ZUR HAUPTBEHANDLUNG DES STÄDTISCHEN UND GEWERBLICHEN ABWASSERS nach Anspruch 3, **dadurch gekennzeichnet, dass** zu Beginn der Abwasserbehandlung durch Einspritzen von Anlagenwasser oder Luft die Spritzer (20) erzeugt werden, die in dem in der Schaufel (11) enthaltenen Abwasser die Trennung des festen Bestandteilen mit geringerem spezifischen Gewicht (B) von den schwereren festen Bestandteilen (C) erleichtern.

5. MASCHINE ZUR HAUPTBEHANDLUNG DES STÄDTISCHEN UND GEWERBLICHEN ABWASSERS nach Anspruch 3, **dadurch gekennzeichnet, dass** am Ende der Behandlung durch Einspritzen von sauberem Wasser und/oder Reinigungssubstanzen Spritzer (21) erzeugt werden, die das Waschen von Kies, beispielsweise Splitt, erlaubt, der auf dem Boden der Schaufel (11) zurückbleibt.

6. MASCHINE ZUR HAUPTBEHANDLUNG DES STÄDTISCHEN UND GEWERBLICHEN ABWASSERS nach einem oder mehreren der vorstehenden Ansprüche, **dadurch gekennzeichnet, dass** im hinteren Filtrationsbereich (5) eine Filtrationsvorrichtung (6) eingefügt ist, die die zurückgehaltenen, festen Bestandteile trägt und auf eine äußere Abtransportfördereinrichtung (8) entleert, wo die gefilterten Bestandteile, bestehend aus den flüssigen und festen Mikropartikeln, deren Partikelgröße kleiner als die Filtrationsöffnung ist, in einer unteren Leitung (9) gesammelt werden.

7. MASCHINE ZUR HAUPTBEHANDLUNG DES STÄDTISCHEN UND GEWERBLICHEN ABWASSERS nach Anspruch 6, **dadurch gekennzeichnet, dass** eine Abtransportschnecke (10) in die untere Leitung (9) eingefügt ist.

8. MASCHINE ZUR HAUPTBEHANDLUNG DES STÄDTISCHEN UND GEWERBLICHEN ABWASSERS nach Anspruch 6, **dadurch gekennzeichnet, dass** die Filtrationsvorrichtung (6) aus einem Schwebebandrechen (7) besteht.

9. MASCHINE ZUR HAUPTBEHANDLUNG DES STÄDTISCHEN UND GEWERBLICHEN ABWASSERS nach einem oder mehreren der vorstehenden Ansprüche, **dadurch gekennzeichnet, dass** die Abtransportfördereinrichtung (8) mit einer zweigerichteten Bewegung versehen ist, die dazu vorgesehen ist, das Abwasser in zwei verschiedenen Sammelbehältern (15, 16) zu lagern; alternativ hierzu werden die nicht absetzbaren Stoffe, beispielsweise organische Abfälle, in einem ersten Behälter (15) gesammelt, wobei die absetzbaren Stoffe, bestehend aus gewaschenem Kies, beispielsweise Splitt, in einem zweiten Behälter (16) gesammelt werden.

10. VERFAHREN ZUR HAUPTBEHANDLUNG DES STÄDTISCHEN UND GEWERBLICHEN ABWASSERS mittels der Maschine nach einem oder mehreren der vorstehenden Ansprüche, **dadurch gekennzeichnet, dass** folgende Schritte vorgesehen sind:
- erster Schritt: Anlagenwasser (H) wird bis zu einem voreingestellten Niveau in den Tank (1) eingefüllt, wobei das Tor (2) bis zur Schließstellung vollständig abgesenkt wird;
- zweiter Schritt: das Abwasser (K) wird in den Tank (1) geschüttet und durch Schwerkraft setzt sich das schwerere Material (P) ab und lagert sich im Inneren der Schaufel (11) ab;
- dritter Schritt: der Kreislauf der druckbeaufschlagten Flüssigkeit (13) wird aktiviert und mittels der Düsen (14) werden Spritzer (20) gebildet, die eine Verwirbelung des Abwassers erzeugen, die das Material mit geringerem spezifischem Gewicht (B), z. B. organische Rückstände, von dem schwereren Materials (C) trennen und es zur Netzwand (17) bringen, wo es gefiltert wird, so dass der flüssige Anteil in der unteren Leitung (9) gesammelt wird, während der feste Anteil auf die Abtransportfördereinrichtung (8) gebracht wird, die ihn in den Sonderbehälter (15) ablädt;
- vierter Schritt: das Tor (2) wird durch die Motorisierung (3) leicht angehoben, um eine kleine Öffnung (18) zu erzeugen, so dass durch die Verwirbelung das abgesetzte Produkt (P1), dessen Partikelgröße kleiner als die Filtrationsöffnung der Netzwand (17) ist, hindurch passt und sich in der Leitung (9) sammelt, wo es mittels einer Abtransportschnecke (10) dekantiert wird;
- fünfter Schritt: sauberes Wasser und/oder Reinigungssubstanzen werden durch die Düsen (14) eingespritzt, um Spritzer (21) zu bilden, die das noch in der Schaufel (11) enthaltene, abgesetzte Produkt (P2) reinigen;
- sechster Schritt: das Tor (2) wird vollständig angehoben und die Schaufel (11) wird betätigt, so dass das abgesetzte, gereinigte Produkt (P2), das sich noch in der Schaufel (11) befindet, auf die Netzwand (17) geschüttet wird, die es auf die Abtransportfördereinrichtung (8) transportiert, von der aus es in einen Spezialbehälter (16) abgeladen wird.

## Revendications

1. MACHINE DE TRAITEMENT PRIMAIRE DES EAUX USÉES URBAINES ET INDUSTRIELLES, destinée à séparer la portion liquide de la portion solide comprenant des substances sédimentables et non sédimentables du type utilisant une seule structure métallique compacte, comprenant un réservoir (1) de collecte des eaux usées, dans lequel il y a une zone de décantation avant (4), où les déchets à traiter sont versés, et une zone de filtration arrière (5), ladite machine **se caractérisant en ce que** la zone de décantation avant (4) et la zone de filtration arrière (5) sont maintenues séparées l'une de l'autre ou sont rendues communicantes au moyen d'une porte coulissante motorisée (2, 3) permettant, au niveau de la partie supérieure, la décharge par débordement du liquide et de la portion solide non sédimentable et permettant, au niveau de la partie inférieure, au moyen d'une ouverture ajustable, le débordement de la portion solide sédimentée, telle que le sable, le sol, les cailloux, le gravier et pierres diverses.

2. MACHINE DE TRAITEMENT PRIMAIRE DES EAUX USÉES URBAINES ET INDUSTRIELLES, selon la revendication 1, **caractérisée en ce qu'**elle permet l'insertion dans la zone avant (4) d'un seau (11) où les substances solides sédimentables sont accumulées par décantation, et qui est pourvu d'un dispositif d'élévation et de rotation (12) qui facilite la décharge des dites substances solides.

3. MACHINE DE TRAITEMENT PRIMAIRE DES EAUX USÉES URBAINES ET INDUSTRIELLES, selon la revendication 2, **caractérisée en ce que** le seau (11) est relié à un circuit de liquide sous pression (13) qui permet, au moyen de buses (14) placés à la base dudit seau (11), de générer des éclaboussures (20, 21) qui frappent la masse des eaux usées contenue dans ledit seau (11).

4. MACHINE DE TRAITEMENT PRIMAIRE DES EAUX USÉES URBAINES ET INDUSTRIELLES, selon la revendication 3, **caractérisée en ce que** les éclaboussures (20) sont générées au début du traitement des eaux usées par injection d'eau ou d'air de l'usine, ce qui facilite, dans les eaux usées contenues dans le seau (11), la séparation du composant solide de poids spécifique plus faible (B) du composant solide plus lourd (C).

5. MACHINE DE TRAITEMENT PRIMAIRE DES EAUX USÉES URBAINES ET INDUSTRIELLES, selon la revendication 3, **caractérisée en ce que** des éclaboussures (21) sont générées vers la fin du traitement par l'injection d'eau propre et/ou de substances de nettoyage, ce qui permet le lavage des pierres, telles que le gravier déposé au fond du seau (11).

6. MACHINE DE TRAITEMENT PRIMAIRE DES EAUX USÉES URBAINES ET INDUSTRIELLES, selon l'une ou plusieurs des revendications précédentes, **caractérisée en ce que** dans la zone de filtration arrière (5) est inséré un dispositif de filtration (6), lequel transporte le composant solide retenu et le décharge sur un transporteur d'évacuation externe (8) tandis que le composant filtré, constitué par les microparticules liquides et solides de taille inférieure à celle de la porte de filtration, est collecté dans un conduit inférieur (9).

7. MACHINE DE TRAITEMENT PRIMAIRE DES EAUX USÉES URBAINES ET INDUSTRIELLES, selon la revendication 6, **caractérisée en ce que** la tarière d'évacuation (10) est insérée dans le conduit inférieur (9).

8. MACHINE DE TRAITEMENT PRIMAIRE DES EAUX USÉES URBAINES ET INDUSTRIELLES, selon la revendication 6, **caractérisée en ce que** le dispositif de filtration (6) comprend un râteau à courroie flexible (7).

9. MACHINE DE TRAITEMENT PRIMAIRE DES EAUX USÉES URBAINES ET INDUSTRIELLES, selon l'une ou plusieurs des revendications précédentes, **caractérisée en ce que** le transporteur d'évacuation (8) peut effectuer un mouvement bidirectionnel, conçu pour déposer les eaux usées dans deux conteneurs de collecte différents (15, 16), alternativement. Les substances non sédimentables, telles que les déchets organiques, sont collectées dans un premier conteneur (15), alors que les substances sédimentables, comprenant des pierres lavées, telles que le gravier, sont collectées dans un deuxième conteneur (16).

10. PROCÉDÉ DE TRAITEMENT PRIMAIRE DES EAUX USÉES URBAINES ET INDUSTRIELLES, réalisé au moyen de la machine selon l'une ou plusieurs des revendications précédentes, **caractérisé en ce qu'**il prévoit les opérations suivantes :
- première étape : l'eau de l'usine (H) est introduite, jusqu'à un niveau prédéfini dans le réservoir (1), avec la porte (2) complètement baissée ou fermée ;
- deuxième étape : les eaux usées (K) sont versées dans le réservoir (1) et par l'effet de la gravité, le matériau plus lourd (P) se dépose au fond du seau (11) ;
- troisième étape : le circuit de liquide sous pression (13) est activé et des éclaboussures (20) sont formées au moyen des buses (14), ce qui génère une turbulence dans les eaux usées qui sépare le matériau de poids spécifique plus faible (B), par exemple les résidus organiques, du matériau lourd (C), et le ramène vers la paroi maillée (17), où il est filtré, de sorte que la portion liquide est collectée dans le conduit (9) ci-dessous, alors que la partie solide est ramenée sur le transporteur d'évacuation (8) qui la décharge dans le conteneur spécial (15) ;
- quatrième étape : la porte (2) est légèrement soulevée au moyen de la motorisation (3) pour créer un petit orifice (18) de sorte que, par l'effet de turbulence, le produit sédimenté (P1) ayant une taille de particule inférieure à celle de la porte de filtration de la paroi maillée (17) passe à travers l'orifice et s'accumule dans le conduit (9), où il est décanté au moyen d'une tarière d'extraction (10) ;
- cinquième étape : de l'eau propre et/ou des substances de nettoyage sont injectées par les embouts (14) pour former des éclaboussures (21) qui nettoient le produit sédimenté (P2) toujours contenu dans le seau (11) ;
- sixième étape : la porte (2) est complètement soulevée et le seau (11) est actionné, de sorte que le produit propre sédimenté (P2) qui est toujours contenu dans ledit seau (11) est versé sur la paroi maillée (17), qui le transporte sur le transporteur d'évacuation (8), à partir duquel il est déchargé dans un conteneur spécial (16).
